(19) Europäisches Patentamt
European Patent Office
Office européen des brevets

(11) EP 3 034 373 A1

(12) EUROPEAN PATENT APPLICATION
published in accordance with Art. 153(4) EPC

(43) Date of publication:
22.06.2016 Bulletin 2016/25

(51) Int Cl.:
B60W 40/114 (2012.01)   B60K 28/10 (2006.01)
B60T 7/20 (2006.01)   B60T 8/1755 (2006.01)
B60W 30/02 (2012.01)   B62D 53/02 (2006.01)

(21) Application number: 14845699.9

(22) Date of filing: 02.09.2014

(86) International application number:
PCT/JP2014/073022

(87) International publication number:
WO 2015/041042 (26.03.2015 Gazette 2015/12)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 19.09.2013 JP 2013194382

(71) Applicant: Hitachi Automotive Systems, Ltd.
Hitachinaka-shi, Ibaraki 312-8503 (JP)

(72) Inventors:
• FUJII, Yusuke
Atsugi-shi
Kanagawa 243-8510 (JP)
• SHIBAYAMA, Junichi
Atsugi-shi
Kanagawa 243-8510 (JP)

(74) Representative: Hoefer & Partner Patentanwälte
mbB
Pilgersheimer Straße 20
81543 München (DE)

(54) VEHICLE CONTROL APPARATUS

(57) The present invention provides a vehicle control apparatus capable of determining an oscillating motion with no or less delay. The vehicle control apparatus includes a vehicle behavior detection sensor configured to detect a behavior acting on a vehicle, a vehicle behavior reference value calculation unit configured to calculate a reference value of the behavior of the vehicle, based on an output value of another sensor than the vehicle behavior detection sensor, and an oscillating detection unit configured to compare the output value of the sensor and the reference value and detect that a trailer towed by a towing vehicle has an oscillating motion, based on a magnitude of an amplitude of the output value relative to an amplitude of the reference value.

Fig. 2

**Description**

TECHNICAL FIELD

The present invention relates to a vehicle control apparatus.

BACKGROUND ART

Conventional vehicle control apparatuses determine, at a specific timing of an oscillating motion, how large the oscillating motion is. Patent Literature 1 discusses one example relating to the above-described technique.

CITATION LIST

PATENT LITERATURE

[PTL 1] Japanese Patent No. 4758102

SUMMARY OF INVENTION

TECHNICAL PROBLEM

However, the above-described conventional technique can determine the oscillating motion only at the specific timing of the oscillating motion, thereby involving such a problem that a delay occurs in the determination about the oscillating motion.
An object of the present invention is to provide a vehicle control apparatus capable of determining the oscillating motion with no or less delay.

SOLUTION TO PROBLEM

According to an aspect of the present invention, a vehicle control apparatus compares an output value of a vehicle behavior detection sensor and a reference value of a behavior of a vehicle, and detects that a trailer towed by the vehicle has an oscillating motion based on a magnitude of an amplitude of the output value relative to the reference value.

ADVANTAGEOUS EFFECTS OF INVENTION

Therefore, the vehicle control apparatus according to the present invention can determine the oscillating motion with no or less delay.

BRIEF DESCRIPTION OF DRAWINGS

Fig. 1 illustrates a configuration of a vehicle control apparatus according to a first embodiment.
Fig. 2 illustrates a control configuration of an oscillating motion control unit 111 according to the first embodiment.
Fig. 3 is a flowchart illustrating a flow of processing for determining the oscillating motion that is performed by an oscillating motion determination unit 207 according to the first embodiment.
Fig. 4 is a timing diagram illustrating a function of damping the oscillating motion according to the first embodiment.
Fig. 5 illustrates a control configuration of the oscillating motion control unit 111 according to the second embodiment.
Fig. 6 is a flowchart illustrating a flow of processing for determining the oscillating motion that is performed by the oscillating motion determination unit 222 according to the second embodiment.
Fig. 7 illustrates a map indicating a setting of an oscillating motion presence determination threshold value $Kp_1$ according to an angular velocity $\omega$ according to the second embodiment.
Fig. 8 illustrates a map indicating a setting of an oscillating motion absence determination threshold value $Kp_2$ according to the angular velocity $\omega$ according to the second embodiment.
Fig. 9 is a timing diagram illustrating a function of damping the oscillating motion according to the second embodiment.

DESCRIPTION OF EMBODIMENTS

[First Embodiment]

First, a configuration will be described.

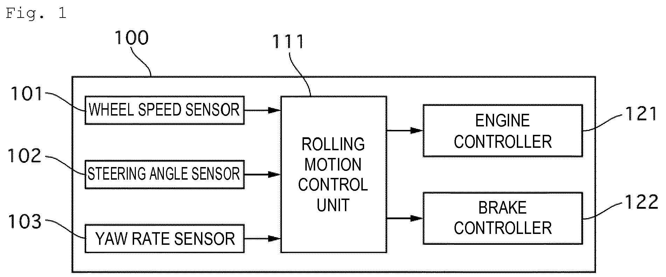

Fig. 1 illustrates a configuration of a vehicle control apparatus according to a first embodiment. The vehicle control apparatus is mounted on a towing vehicle that tows a trailer.
The vehicle control apparatus 100 according to the first embodiment includes a wheel speed sensor 101, a steering angle sensor 102, a yaw rate sensor 103, an oscillating motion control unit 111, an engine controller 121, and a brake controller 122. The wheel speed sensor 101 detects a wheel speed of the towing vehicle. The steering angle sensor 102 detects how much a driver steers. The yaw rate sensor 103 detects a yawing motion (a yaw rate) of the towing vehicle. The oscillating motion control unit 111 determines whether the trailer has an oscillating motion based on an output value of each of the sensors, and outputs an instruction to damp the oscillating motion to the engine controller 121 and the brake controller 122 if determining that the trailer has the oscillating motion. The engine controller 121 controls an engine output, and the brake controller 122 controls a braking force, based on the instruction from the oscillating motion control unit 111. More specifically, the engine controller 121 reduces an engine torque, and the brake controller 122 applies a brake hydraulic pressure to a wheel cylinder (not illustrated).

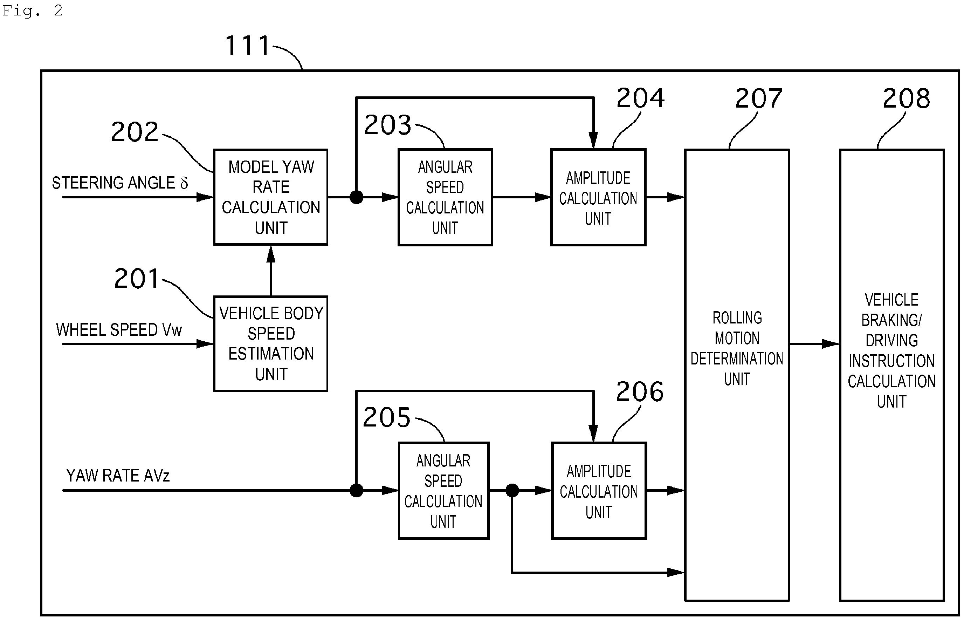

Fig. 2 illustrates a control configuration of the oscillating motion control unit 111 according to the first embodiment.
A vehicle body speed estimation unit 201 calculates a vehicle body speed V from a wheel speed Vw acquired from the wheel speed sensor 101.
A model yaw rate calculation unit 202 calculates a model yaw rate AVz* according to an expression 1 from the vehicle body speed V and a steering angle δ acquired from the steering angle sensor 102.
[Formula 1]

$$AVz^* = \frac{1}{1+A \cdot V^2} \cdot \frac{V}{l} \delta \qquad \cdots \text{Expression 1}$$

In this expression, A represents a stability factor, and 1 represents a wheel base.
An angular velocity calculation unit 203 calculates an angular velocity ω* of the model yaw rate when the model yaw rate AVz* changes sinusoidally, according to an expression 2 from the model yaw rate AVz* and a second-order temporal differentiation value AVz*" of the model yaw rate.
[Formula 2]

$$\omega^* = \sqrt{-\frac{AVz^{*''}}{AVz^*}} \qquad \cdots \text{Expression 2}$$

It can be easily anticipated that the model yaw rate AVz* of zero or a value close to zero would make it impossible to calculate the angular velocity ω* of the model yaw rate, lead to a significantly large error in the calculation, or cause an imaginary number to be acquired as the angular velocity ω*.
In this case, use of a result of a previous calculation, setting an upper/lower limit on a calculated value, or the like is effective to avoid these problems.
An amplitude calculation unit 204 calculates an amplitude R* of the model yaw rate when the model yaw rate AVz* changes sinusoidally, according to an expression 3 from the model yaw rate AVz*, a first-order temporal differentiation value AVz*' of the model yaw rate and the angular velocity ω* of the model yaw rate that is calculated by the angler velocity calculation unit 203.
[Formula 3]

$$R^* = \sqrt{(AVz^*)^2 + \left(\frac{AVz^{*'}}{\omega^*}\right)^2} \qquad \cdots \text{Expression 3}$$

The amplitude R* of the model yaw rate may be calculated according to an expression 4 based on the expression 2 and the expression 3.
[Formula 4]

$$R^* = \sqrt{(AVz^*)^2 - \frac{AVz^* \cdot AVz^{*'2}}{AVz^{*''}}} \qquad \cdots \text{Expression 4}$$

The expression 3 and the expression 4 contain a subtraction, and thus may be unable to be calculated or lead to a large error in the calculation similarly to the expression 2, thereby also requiring use of a result of a previous calculation, setting an upper/lower limit on a calculated value, or the like.

An angular velocity calculation unit 205 calculates an angular velocity $\omega$ of a measured yaw rate AVz when the measured raw rate AVz changes sinusoidally, according to an expression 5 from the measured yaw rate AVz acquired from the yaw rate sensor 103 and a second-order temporal differential value $AVz''$ of the measured yaw rate, similarly to the angular velocity calculation unit 203.

[Formula 5]

$$\omega = \sqrt{-\frac{AVz''}{AVz}} \qquad \cdots \text{Expression 5}$$

An amplitude calculation unit 206 calculates an amplitude R of the measured yaw rate when the measured yaw rate AVz changes sinusoidally, according to an expression 6 from a first-order temporal differentiation value $AVz'$ of the measured yaw rate and the angular velocity $\omega$ of the measured yaw rate that is calculated by the angler velocity calculation unit 205, similarly to the amplitude calculation unit 204.

[Formula 6]

$$R = \sqrt{(AVz)^2 + \left(\frac{AVz'}{\omega}\right)^2} \qquad \cdots \text{Expression 6}$$

The amplitude R of the measured yaw rate may be calculated from the first-order temporal differential value $AVz'$ and the second-order temporal differentiation value $AVz''$ of the measured yaw rate AVz, similarly to the method for calculating the amplitude $R^*$ of the model yaw rate, which is indicated in the expression 4.

An oscillating motion determination unit 207 compares the amplitude $R^*$ of the model yaw rate and the amplitude R of the measured yaw rate, and determines the oscillating motion. A method for this determination will be described below.

A vehicle braking/driving instruction calculation unit 208 calculates the instruction to be issued to the engine controller 121 and the brake controller 122.

[Processing for Determining Oscillating Motion]

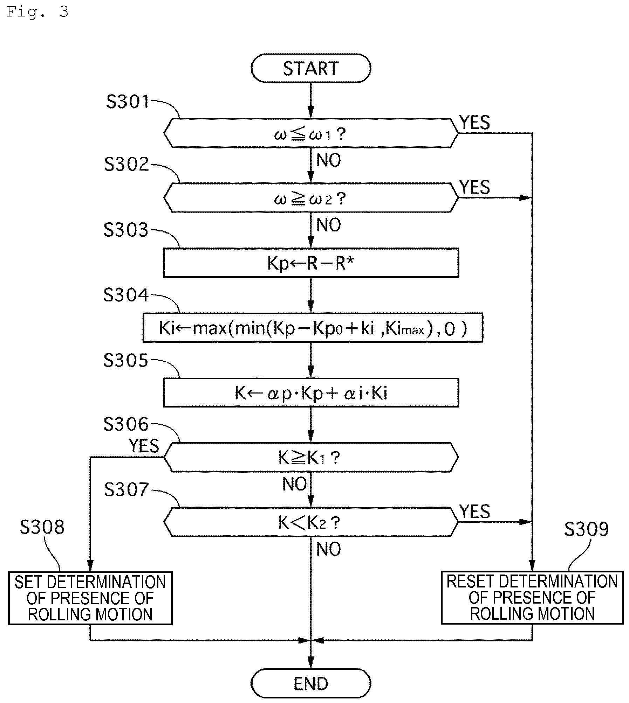

Fig. 3 is a flowchart illustrating a flow of processing for determining the oscillating motion that is performed by the oscillating motion determination unit 207 according to the first embodiment.

In step 301, the oscillating motion determination unit 207 determines whether the angular velocity $\omega$ of the measured yaw rate is equal to or lower than a first angular velocity $\omega$ that does not cause the oscillating motion. If the oscillating motion determination unit 207 determines YES in step 301, the processing proceeds to step 309. If the oscillating motion determination unit 207 determines NO in step 301, the processing proceeds to step 302.

In step 302, the oscillating motion determination unit 207 determines whether the angular velocity $\omega$ of the measured yaw rate is equal to or higher than a second angular velocity $\omega_2$ that does not cause the oscillating motion. If the oscillating motion determination unit 207 determines YES in step 302, the processing proceeds to step 309. If the oscillating motion determination unit 207 determines NO in step 302, the processing proceeds to step 303. The second angular velocity $\omega_2$ is a higher velocity than the first angular velocity $\omega_1$.

In step 303, the oscillating motion determination unit 207 calculates a preliminary oscillating motion index Kp as a difference between the amplitude $R^*$ of the model yaw rate and the amplitude R of the measured yaw rate. The preliminary index Kp may be an integral value of the difference between the amplitude $R^*$ of the model yaw rate and the amplitude R of the measured yaw rate.

In step 304, the oscillating motion determination unit 207 calculates a preliminary oscillating motion index Ki. The preliminary index Ki is calculated according to an expression 7 from the preliminary oscillating motion index Kp, a convergence term $Kp_0$ of the preliminary oscillating motion index Ki, and the preliminary oscillating motion index Ki calculated during previous execution of the processing.

$$\text{Ki} \leftarrow \max(\min(\text{Kp} - \text{Kp}_0 + \text{Ki}, \text{Ki}_{max}), 0) \ … \ \text{Expression 7}$$

In the expression 7, an upper limit value $\text{Ki}_{max}$ is imposed on the preliminary oscillating motion index Ki so that the oscillating motion determination unit 207 can determine a deviation of the control of damping the oscillating motion without delay even when it takes a long time to damp the oscillating motion. Further, a lower limit value 0 is imposed on the preliminary oscillating motion index Ki so that the oscillating motion determination unit 207 can determine the oscillating motion without delay, which otherwise might be caused due to a reduction in the preliminary oscillating motion index Ki when the trailer does not have the oscillating motion.

In step 305, the oscillating motion determination unit 207 calculates an oscillating motion index K (an oscillating tendency index) according to an expression 8 from a gain $\alpha i$ used for the preliminary oscillating motion index Ki, the preliminary oscillating motion index Ki, a gain $\alpha p$ used for the preliminary oscillating motion index Kp, and the preliminary oscillating motion index Kp.

$$K \leftarrow \alpha p \times Kp + \alpha i \times Ki \ … \ \text{Expression 8}$$

In step 306, the oscillating motion determination unit 207 compares the oscillating motion index K and an oscillating motion presence determination threshold value (a first determination threshold value) $K_1$, and determines whether the oscillating motion index K is equal to or higher than the oscillating motion presence determination threshold value $K_1$. If the oscillating motion determination unit 207 determines YES in step 306, the processing proceeds to step 308. If the oscillating motion determination unit 207 determines NO in step 306, the processing proceeds to step 307.

In step 307, the oscillating motion determination unit 207 compares the oscillating motion index K and an oscillating motion absence determination threshold value (a second determination threshold value) $K_2$, and determines whether the oscillating motion index K is lower than the oscillating motion absence determination threshold value $K_2$. If the oscillating motion determination unit 207 determines YES in step 307, the processing proceeds to step 309. If the oscillating motion determination unit 207 determines NO in step 307, the processing ends. In the first embodiment, the threshold values are assumed to be $K_2 = K_1$.

In step 308, the oscillating motion determination unit 207 sets the determination of the presence of the oscillating motion. Then, the processing ends.

In step S309, the oscillating motion determination unit 207 clears the determination of the presence of the oscillating motion. Then, the processing ends.

Next, a function will be described.

[Function of Damping Oscillating Motion]

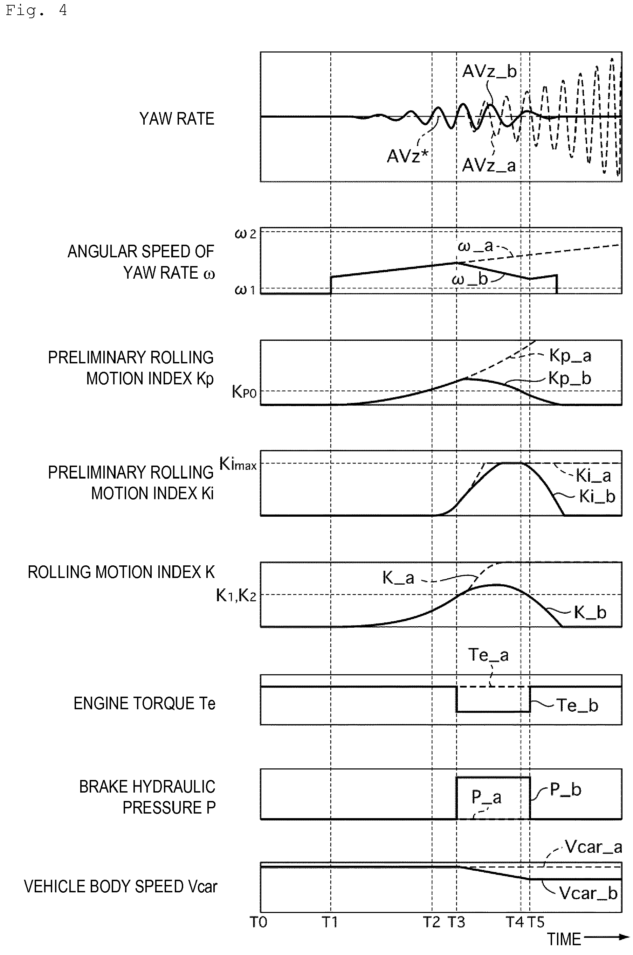

Fig. 4 is a timing diagram illustrating a function of damping the oscillating motion according to the first embodiment, in which the oscillating motion starts from time T1. Signals in the diagram with a suffix "_a" added thereto are signals when the oscillating motion is not damped. On the other hand, signals in the diagram with a suffix "_b" added thereto are signals of the vehicle control apparatus according to the first embodiment, and signals when the vehicle control apparatus detects the oscillating motion and performs the control for damping the oscillating motion. Further, in either case, the model yaw rate AVz* corresponds to a model yaw rate based on an input from the driver.

When the oscillating motion is not damped, the amplitude of the yaw rate AVz_a detected by the yaw rate sensor mounted on the towing vehicle is ever increasing relative to the model yaw rate AVz* based on the input from the driver. As a result, the preliminary oscillating motion index Kp_a, which is the difference between the amplitude of the model yaw rate AVz* and the amplitude of the yaw rate AVz_a, continues increasing. From time T2 when the preliminary oscillating motion index Kp_a exceeds the convergence term $\text{Kp}_0$ of the preliminary oscillating motion index Ki, the preliminary oscillating motion index Ki_a also starts increasing to reach the upper limit value $\text{Ki}_{max}$ of the oscillating motion index. However, no determination is made about the oscillating motion, so that the amplitude of the yaw rate AVz_a continues increasing and the safety of the trailer and the towing vehicle continues deteriorating.

On the other hand, the first embodiment exhibits a similar movement to the configuration that does not damp the oscillating motion until time T3. However, at time T3, the oscillating motion index K_b reaches or exceeds the oscillating motion presence determination threshold value $K_1$, and the angular velocity $\omega$_b of the yaw rate is higher than the first angular velocity $\omega_1$ that does not cause the oscillating motion while being lower than the second angular velocity $\omega_2$ that does not cause the oscillating motion. Therefore, the determination of the presence of the oscillating motion is set. As a result, the engine controller 121 reduces an engine torque Te_b, and the brake controller 122 applies a brake hydraulic pressure P_b, which slows down a vehicle body speed Vcar_b. Slowing down the vehicle body speed can damp the oscillating motion, which contributes to improvement of the stability of the vehicle.

Further, damping the oscillating motion leads to a reduction in the amplitude of the yaw rate, and thus a reduction in the preliminary oscillating motion index Kp_b. When the preliminary oscillating motion index Kp_b falls below the convergence term $Kp_0$ of the preliminary oscillating motion index Ki at time T4, the preliminary oscillating motion index Ki_b also starts reducing. When the oscillating motion index K_b falls below the oscillating motion determination absence threshold value $K_2$ at time T5, the determination of the presence of the oscillating motion is reset, which returns the engine torque Te_b and the brake hydraulic pressure P_b into a uncontrolled state.

The conventional vehicle control apparatuses can determine the oscillating motion only at the specific timing of the oscillating motion, thereby involving such a problem that a delay occurs in the determination about the oscillating motion and thus a delay occurs in intervention of the control for damping the oscillating.

On the other hand, the first embodiment allows the vehicle control apparatus to constantly determine the oscillating motion to thereby realize a quick determination about the oscillating motion and speedy control for damping the oscillating motion, without additionally providing a new sensor to a conventional slip prevention apparatus. As a result, the vehicle control apparatus can enhance the safety and reduce a control amount, thereby succeeding in relieving discomfort of a passenger.

In the first embodiment, the vehicle control apparatus determines the oscillating motion by comparing the measured yaw rate AVz and the model yaw rate AVz*. When the towed trailer has the oscillating motion, a lateral change amount, such as the yaw rate, a lateral acceleration, a slip angle of the vehicle, transitions sinusoidally. Therefore, the vehicle control apparatus can highly accurately determine the oscillating motion by monitoring the yaw rate, which is one of the examples of the lateral change amount, and comparing the monitored yaw rate with the model.

In the first embodiment, the vehicle control apparatus estimates the model yaw rate AVz* based on the vehicle body speed V estimated from the wheel speed Vw. A path of the vehicle that is provided from the steering angle $\delta$ depends on the vehicle body speed V, i.e., the wheel speed Vw. Therefore, the vehicle control apparatus can highly accurately estimate a yaw rate supposed to act on the vehicle when the vehicle runs along the path provided from the steering angle $\delta$ (the model yaw rate AVz*) by estimating the model yaw rate AVz* from the wheel speed Vw.

In the first embodiment, the vehicle control apparatus estimates the angular velocities $\omega$ and $\omega$* of the measured yaw rate AVz and the model yaw rate AVz* from the second-order temporal differential values AVz" and AVz*" of the measured yaw rate AVz and the model yaw rate AVz*. This estimation allows the vehicle control apparatus to accurately estimate the angular velocities $\omega$ and $\omega$* without use of a complicated calculation.

In the first embodiment, the vehicle control apparatus estimates the amplitudes R and R* of the measured yaw rate and the model yaw rate from the measured yaw rate AVz and the model yaw rate AVz*, the first-order temporal differential values AVz' and AVz*' of the measured yaw rate and the model yaw rate, and the angular velocities $\omega$ and $\omega$* of the measured yaw rate and the model yaw rate. Alternatively, the vehicle control apparatus estimates the amplitudes R and R* from the first-order temporal differential values AVz' and AVz*' of the measured yaw rate and the model yaw rate, and the second-order differential values AVz" and AVz*" of the measured yaw rate and the model yaw rate. This estimation allows the vehicle control apparatus to highly accurately estimate the amplitudes R and R* without use of a complicated calculation.

In the first embodiment, the vehicle control apparatus increases the oscillating motion index K for determining the oscillating motion as the difference between the amplitude R* of the model yaw rate and the amplitude R of the measured yaw rate (the preliminary oscillating motion index Kp) widens, and reduces the oscillating motion index K as this difference shrinks. The oscillating motion can be determined from the difference between the amplitude R* of the model yaw rate and the amplitude R of the measured yaw rate, whereby the vehicle control apparatus can highly accurately determine the oscillating motion by increasing or reducing the oscillating motion index K according to the difference between the amplitudes.

In the first embodiment, the vehicle control apparatus determines that the trailer has the oscillating motion if the oscillating motion index K is equal to or higher than the oscillating motion presence determination threshold value $K_1$, and determines that the trailer does not have the oscillating motion if the oscillating motion index K is lower than the oscillating motion absence determination threshold value $K_2$. In other words, the vehicle control apparatus can determine the oscillating motion with such a simple configuration that compares the oscillating motion index K determined from the difference between the amplitude R* of the model yaw rate and the amplitude R of the measured yaw rate with the threshold values $K_1$ and $K_2$.

In the first embodiment, the vehicle control apparatus does not determine that the trailer has the oscillating motion even if the oscillating motion index K is equal to or higher than the oscillating motion presence determination threshold value $K_1$, as long as the angular velocity as the output value is equal to or lower than the first angular velocity $\omega_1$ that does not cause the oscillating motion or equal to or higher than the second angular velocity $\omega_2$ that does not cause the oscillating motion. This arrangement can prevent the oscillating motion from being falsely detected in a scene where the oscillating motion does not occur.

In the first embodiment, the vehicle control apparatus compares the measured yaw rate AVz and the model yaw rate AVz*, and detects that the trailer towed by the towing vehicle has the oscillating motion if a gradual increase occurs in the difference (the preliminary index Kp) of the amplitude of the measured yaw rate AVz from the model yaw rate AVz*. When the oscillating motion starts, the amplitude of the yaw rate increases, thereby exhibiting the gradual increase in the difference of the amplitude of the measured yaw rate AVz from the model yaw rate AVz*. Therefore, the vehicle control apparatus can quickly and accurately determine the oscillating motion by determining that the trailer has the oscillating motion when the difference of the amplitude gradually increases.

In the first embodiment, the vehicle control apparatus damps the oscillating motion by slowing down the vehicle, if the trailer is determined to have the oscillating motion. Slowing down the speed of the vehicle body can damp the oscillating motion, which contributes to the improvement of the stability of the vehicle.

Next, advantageous effects will be described.

The vehicle control apparatus according to the first embodiment brings about advantageous effects that will be listed below.

(1) The vehicle control apparatus includes the yaw rate sensor 103 (a vehicle behavior detection sensor) that detects the yaw rate acting on the vehicle, the model yaw rate calculation unit 202 (a vehicle behavior reference value calculation unit) that calculates the model yaw rate AVz* based on the output values of the wheel speed sensor 101 and the steering angle sensor 102, which are other sensors than the yaw rate sensor 103, and the oscillating motion determination unit 207 (an oscillating detection unit) that compares the measured yaw rate Avz, which is the output value of the yaw rate sensor 103, and the model yaw rate AVz* to detect that the trailer towed by the towing vehicle has the oscillating motion based on the magnitude of the amplitude of the measured yaw rate AVz relative to the model yaw rate AVz*.

Therefore, the vehicle control apparatus can determine the oscillating motion with no or less delay.

(2) The vehicle control apparatus includes the yaw rate sensor 103 that detects the yaw rate acting on the vehicle, the model yaw rate calculation unit 202 (the vehicle behavior reference value calculation unit) that estimates the yaw rate supposed to act on the vehicle from the steering angle $\delta$ and the vehicle body speed V as the model yaw rate AVz*, the oscillating motion determination unit 207 (the oscillating detection unit) that compares the measured yaw rate Avz, which is the output value of the yaw rate sensor 103, and the model yaw rate AVz* to detect that the trailer towed by the towing vehicle has the oscillating motion if the amplitude of the measured yaw rate AVz increases relative to the model yaw rate AVz*, and the vehicle braking/driving instruction calculation unit 208 (a speed reduction control unit) that slows down the speed of the towing vehicle if the oscillating motion is detected by the oscillating motion determination unit 207.

Therefore, the vehicle control apparatus can determine the oscillating motion with no or less delay, and thus can damp the oscillating motion swiftly.

(3) The vehicle control apparatus includes the yaw rate sensor 103 that detects the yaw rate acting on the vehicle, the model yaw rate calculation unit 202 (a yaw rate reference value calculation unit) that calculates the model yaw rate AVz*, which is the reference value of the yaw rate, based on the steering angle $\delta$ and the vehicle body speed V, the amplitude calculation unit 206 (a first amplitude calculation unit) that calculates the amplitude from the measured yaw rate AVz, which is the output value of the yaw rate sensor 103, the amplitude calculation unit 204 (a second amplitude calculation unit) that calculates the amplitude of the model yaw rate AVz*, the oscillating motion determination unit 207 (an amplitude comparison unit) that compares the amplitude R* of the model yaw rate AVz* and the amplitude R of the measured yaw rate AVz, and the oscillating motion determination unit 207 (an oscillating detection unit) that detects that the trailer towed by the towing vehicle has the oscillating motion if the comparison reveals the gradual increase in the difference of the amplitude R of the measured yaw rate AVz from the amplitude R* of the model yaw rate AVz*.

Therefore, the vehicle control apparatus can determine the oscillating motion with no or less delay.

[Second Embodiment]

First, a configuration will be described.

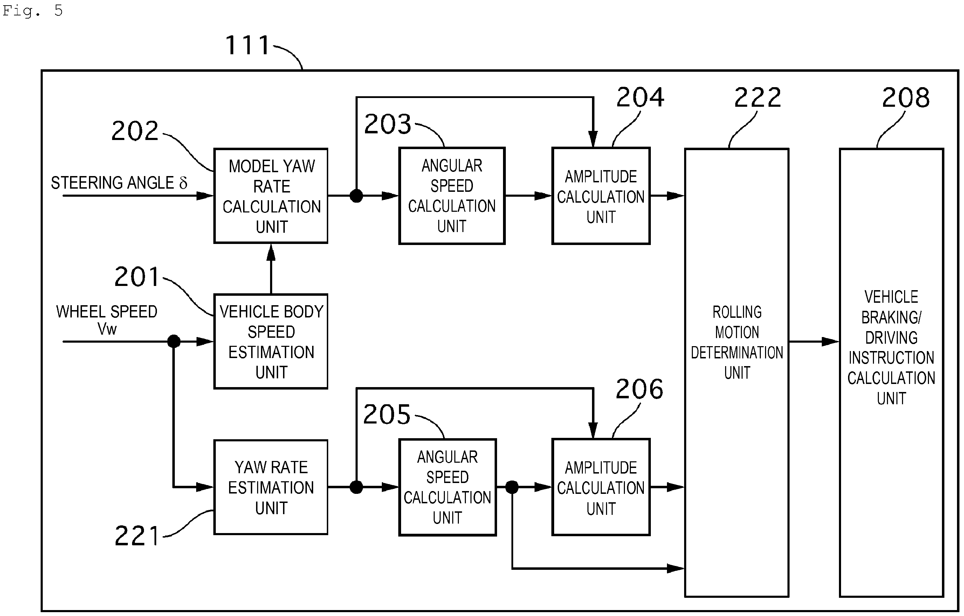

Fig. 5 illustrates a control configuration of the oscillating motion control unit 111 according to a second embodiment.

The oscillating motion control unit 111 according to the second embodiment is configured similarly to the first embodiment illustrated in Fig. 2 except for a yaw rate estimation unit 221 and an oscillating motion determination unit 222. Therefore, in the following description, similar components to the first embodiment will be identified by the same reference numerals as the first embodiment, and will not be redundantly described. In the following description, only the yaw rate estimation unit 221 and the oscillating motion determination unit 222 will be described.

The yaw rate estimation unit 221 calculates a yaw rate estimated value AVz according to an expression 9.

[Formula 7]

$$AVz = \frac{\dfrac{V_{FR} + V_{RR}}{2} - \dfrac{V_{FL} + V_{RL}}{2}}{W_{tb}} \qquad \cdots \text{Expression 9}$$

In the expression 9, $V_{FL}$, $V_{FR}$, $V_{RL}$, $V_{RR}$, and $W_{tb}$ represent a speed of a front left wheel, a speed of a front right wheel, a speed of a rear left wheel, a speed of a rear right wheel, and a track width, respectively.

The oscillating motion determination unit 222 compares the amplitude R* of the model yaw rate and the amplitude R of the measured yaw rate, and determines the oscillating motion. A method for this determination will be described below.

[Processing for Determining Oscillating Motion]

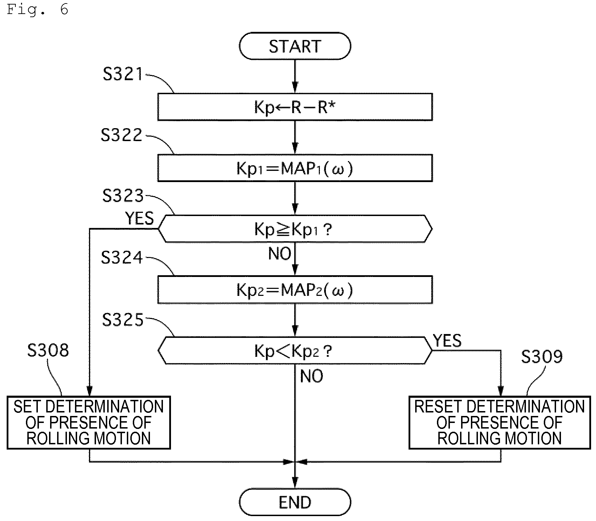

Fig. 6 is a flowchart illustrating a flow of processing for determining the oscillating motion that is performed by the oscillating motion determination unit 222 according to the second embodiment. Steps including similar processing to the first embodiment illustrated in Fig 3 will be identified by the same step numbers as the first embodiment, and will not be redundantly described below.

In step 321, the oscillating motion determination unit 222 calculates the oscillating motion index Kp as the difference between the amplitude R* of the model yaw rate and the amplitude R of the measured yaw rate.

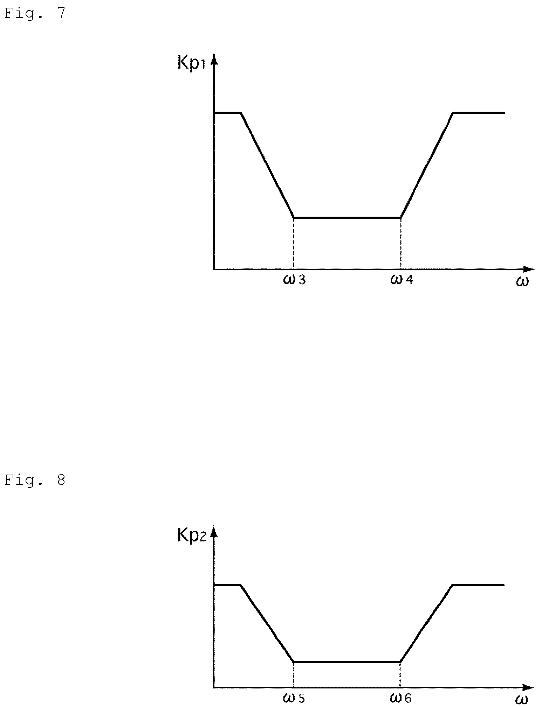

In step 322, the oscillating motion determination unit 222 acquires an oscillating motion presence determination threshold value $Kp_1$ corresponding to the angular velocity $\omega$ of the measured yaw rate from a map. As illustrated in Fig. 7, this map is characterized in the following manner. When the angular velocity $\omega$ is equal to or lower than a third angular velocity $\omega_3$ at which the trailer less likely has the oscillating motion, the oscillating motion presence determination threshold value increases as the angular velocity $\omega$ reduces. When the angular velocity $\omega$ is equal to or higher than a fourth angular velocity $\omega_4$ at which the trailer less likely has the oscillating motion, the oscillating motion presence determination threshold value increases as the angular velocity $\omega$ increases. A maximum value (a third determination threshold value) and a minimum value (a fourth determination threshold value) of the oscillating motion presence determination threshold value $Kp_1$ are $Kp_{1max}$ and $Kp_{1min}$, respectively.

In step 323, the oscillating motion determination unit 222 compares the oscillating motion index Kp and the oscillating motion presence determination threshold value $Kp_1$, and determines whether the oscillating motion index Kp is equal to or higher than the oscillating motion presence determination threshold value $Kp_1$. If the oscillating motion determination unit 222 determines YES in step 323, the processing proceeds to step 308. If the oscillating motion determination unit 222 determines NO in step 323, the processing proceeds to step 324.

In step 324, the oscillating motion determination unit 222 acquires an oscillating motion absence determination threshold value $Kp_2$ corresponding to the angular velocity $\omega$ of the measured yaw rate from a map. As illustrated in Fig. 8, this map is characterized in the following manner. When the angular velocity $\omega$ is equal to or lower than a fifth angular velocity $\omega_5$ at which the trailer less likely has the oscillating motion, the oscillating motion presence determination threshold value increases as the angular velocity $\omega$ reduces. When the angular velocity $\omega$ is equal to or higher than a sixth angular velocity $\omega_6$ at which the trailer less likely has the oscillating motion, the oscillating motion presence determination threshold value increases as the angular velocity $\omega$ increases. A maximum value (a fifth determination threshold value) and a minimum value (a sixth determination threshold value) of the oscillating motion absence determination threshold value $Kp_2$ are $Kp_{2max}$ and $Kp_{2min}$, respectively. In the second embodiment, the threshold values $Kp_1$ and $Kp_2$ are assumed to be $Kp_1 > Kp_2$ regardless of the angular velocity $\omega$.

In step 325, the oscillating motion determination unit 222 compares the oscillating motion index Kp and the oscillating motion absence determination threshold value $Kp_2$, and determines whether the oscillating motion index Kp is lower than the oscillating motion absence determination threshold value $Kp_2$. If the oscillating motion determination unit 222 determines YES in step 325, the processing proceeds to step 309. If the oscillating motion determination unit 222 determines NO in step 325, the processing ends.

Next, a function will be described.

[Function of Damping Oscillating Motion]

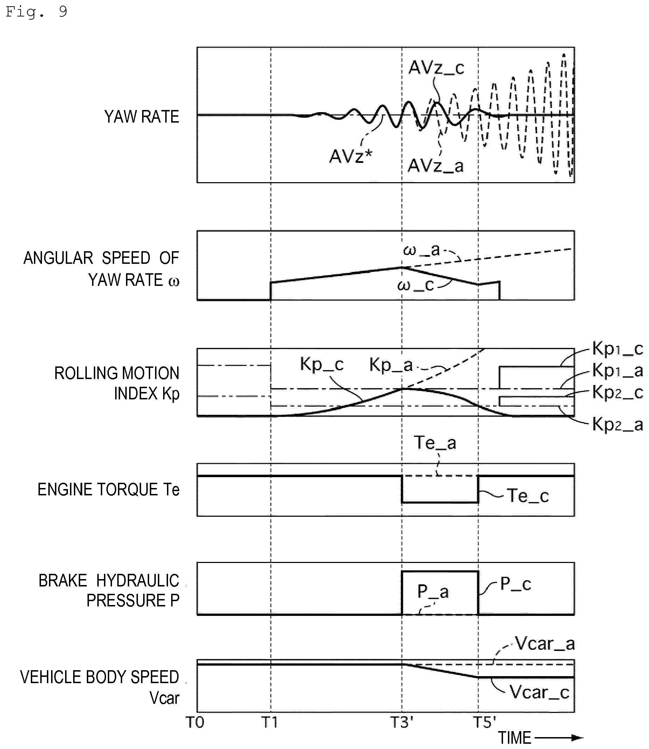

Fig. 9 is a timing diagram illustrating a function of damping the oscillating motion according to the second embodiment, in which the oscillating motion starts from time T1. The signals in the diagram with the suffix "_a" added thereto are the signals when the oscillating motion is not damped. On the other hand, signals in the diagram with a suffix "_c" added thereto are signals of the vehicle control apparatus according to the second embodiment, and signals when the vehicle control apparatus detects the oscillating motion and performs the control for damping the oscillating motion. Further, in either case, the model yaw rate AVz* corresponds to the model yaw rate based on the input from the driver.

When the oscillating motion is not damped, the oscillating motion index Kp_a, which is the difference between the amplitude of the model yaw rate AVz* and the amplitude of the measured yaw rate AVz_a, is ever increasing. However, no determination is made about the oscillating motion, so that the amplitude of the yaw rate AVz_a continues increasing and the safety of the trailer and towing vehicle continues deteriorating.

On the other hand, the second embodiment exhibits a similar movement to the configuration that does not damp the oscillating motion until time T3'. However, at time T3', the oscillating motion index Kp_c reaches or exceeds the oscillating motion presence determination threshold value $Kp_1\_c$, so that the determination of the presence of the oscillating motion is set. As a result, the engine controller 121 reduces an engine torque Te_c, and the brake controller 122 applies a brake hydraulic pressure P_c, which slows down a vehicle body speed Vcar_c. Slowing down the vehicle body speed can damp the oscillating motion, which contributes to the improvement of the stability of the vehicle.

Further, damping the oscillating motion leads to a reduction in the amplitude of the yaw rate, and thus a reduction in the oscillating motion index Kp_c. When the oscillating motion index Kp_c falls below the oscillating motion absence determination threshold value $Kp_2\_c$ at time T5', the determination of the presence of the oscillating motion is reset, which returns the engine torque Tc_c and the brake hydraulic pressure P_c into the uncontrolled state.

In the second embodiment, when the angular velocity $\omega$ of the measured yaw rate is higher than the third angular velocity $\omega_3$ and lower than the fourth angular velocity $\omega_4$, the vehicle control apparatus determines that the trailer has the oscillating motion if the oscillating motion index Kp is equal to or higher than the oscillating motion presence determination threshold value $Kp_{1min}$, and determines that the oscillating motion is maintained until the oscillating motion index Kp falls below the oscillating motion absence determination threshold value $Kp_{2min}$ after that. On the other hand, when the angular velocity $\omega$ of the measured yaw rate is equal to or lower than the third angular velocity $\omega_3$, or equal to or higher than the fourth angular velocity $\omega_4$, the vehicle control apparatus does not determine that the trailer has the oscillating motion until the oscillating motion index Kp reaches or exceeds the oscillating motion presence determination threshold value $Kp_1$ larger than the oscillating motion presence determination threshold value $Kp_{1min}$, and determines that the trailer does not have the oscillating motion if the oscillating motion index Kp falls below the oscillating motion absence determination threshold value $Kp_2$ larger than the oscillating motion absence determination threshold value $Kp_{2min}$. In other words, the vehicle control apparatus changes the oscillating motion presence determination threshold value $Kp_1$ and the oscillating motion absence determination threshold value $Kp_2$ according to the likelihood of the oscillating motion. This control can realize both the prevention of the delay in the determination about the oscillating motion, and the prevention of the false detection of the oscillating motion.

[Other Embodiments]

Having described aspects for embodying the present invention based on the embodiments, the specific configuration of the present invention is not limited to the configurations described in the embodiments. The embodiments are kept included in the present invention even if a design or the like thereof is changed without departing from the gist of the present invention.

For example, the embodiments have been described, by way of example, assuming that each of the sensors is mounted on the vehicle. However, the vehicle control apparatus may be configured to receive a sensor value from outside, without each of the sensors mounted on the vehicle. Further, the oscillating motion control unit 111, and a part or whole of the engine controller 121 and the brake controller 122 may be built in a same device.

In a case where the vehicle control apparatus includes a unit for detecting the vehicle body speed, without relying on the wheel speed, the vehicle control apparatus may calculate the model yaw rate from the towing vehicle body speed. Further, the model yaw rate is not limited to the model yaw rate calculated from the expression 1, and may be corrected based on, for example, a steering angular velocity or the lateral acceleration of the vehicle body.

In the embodiments, the oscillating motion presence determination threshold value $K_1$ and the oscillating motion absence determination threshold value $K_2$ are set to the same value as each other, but may be set to different values from each other.

In the embodiments, the yaw rate is used as the reference signal based on the model and the measured signal, but may be replaced with the lateral acceleration or the slip angle (sideslip angle) of the vehicle.

Further, especially the slip angle of the vehicle does not have to be directly acquired by the sensor as the measured signal, and may be a signal estimated from an alternative signal.

The determination of the presence of the oscillating motion and the determination of the absence of the oscillating motion may be made with use of two or more among an oscillating motion index calculated from the yaw rate, an oscillating motion index calculated from the lateral acceleration, and an oscillating motion index calculated from the slip angle of the vehicle, for the purpose of enhancing robustness.

In the embodiments, the brake hydraulic pressure is used as the braking force, but another braking method, such as a regenerative braking force, may be used as the braking force.

Not only the braking force generator of the towing vehicle but also a braking force generator of the trailer may be used.

The unit for reducing the engine torque may be omitted.

In the second embodiment, the vehicle control apparatus increases/reduces the oscillating motion presence determination threshold value $Kp_1$ and the oscillating motion absence determination threshold value $Kp_2$ according to the angular velocity $\omega$ of the measured yaw rate with use of the maps illustrated in Figs. 7 and 8. However, it can be easily anticipated that the vehicle control apparatus can also achieve another embodiment and bring about similar advantageous effects by correcting the oscillating motion index Kp indicated in step 321 illustrated in Fig. 6.

Further, embodiments of the present invention may be configured in the following manner.

(1) A vehicle control apparatus includes a vehicle behavior detection sensor configured to detect a behavior acting on a vehicle, a vehicle behavior reference value calculation unit configured to calculate a reference value of the behavior of the vehicle, based on an output value of another sensor than the vehicle behavior detection sensor, and an oscillating detection unit configured to compare the output value of the sensor and the reference value and detect that a trailer towed by a towing vehicle has an oscillating motion, based on a magnitude of an amplitude of the output value relative to an amplitude of the reference value.

(2) In the vehicle control apparatus described in the item (1), the behavior of the vehicle is at least one of a yaw rate, a lateral acceleration, and a slip angle of the vehicle.

(3) In the vehicle control apparatus described in the item (2), the output value of the sensor and the reference value are at least one of a yaw rate, a lateral acceleration, and a slip angle.

(4) In the vehicle control apparatus described in the item (3), angular velocities of the output value and the reference value are estimated from the output value and the reference value, and second-order temporal differential values of the output value and the reference value.

(5) In the vehicle control apparatus described in the item (4), the amplitudes are estimated from the output value and the reference value, first-order temporal differential values of the output value and the reference value, and the angular velocities of the output value and the reference value.

(6) In the vehicle control apparatus described in the item (5), the oscillating detection unit increases or reduces an oscillating tendency index for determining the oscillating motion according to a difference between the amplitude of the reference value and the amplitude of the output value.

(7) In the vehicle control apparatus described in the item (6), the oscillating detection unit determines that the trailer has the oscillating motion if the oscillating tendency index is equal to or higher than a first determination threshold value, and determines that the trailer does not have the oscillating motion if the oscillating tendency index is lower than a second determination threshold value.

(8) In the vehicle control apparatus described in the item (7), the oscillating tendency index is an integral value of a value according to the difference between the amplitude of the reference value and the amplitude of the output value of the sensor.

(9) In the vehicle control apparatus described in the item (4), the amplitudes are estimated from first-order differential values of the output value and the reference value, and the second-order differential values of the output value and the reference value.

(10) In the vehicle control apparatus described in the item (3), when an angular velocity of the yaw rate is higher than a third angular velocity and lower than a fourth angular velocity, the oscillating detection unit determines that the trailer has the oscillating motion if an oscillating tendency index is equal to or higher than an oscillating motion presence determination threshold value, and determines that the oscillating motion is maintained until the oscillating tendency index falls below an oscillating motion absence determination threshold value after that.

(11) In the vehicle control apparatus described in the item (3), the oscillating detection unit does not determine that the trailer has the oscillating motion if an angular velocity of the output value is equal to or lower than a first angular velocity that does not cause the oscillating motion, or equal to or higher than a second angular velocity that does not cause the oscillating motion.

(12) In the vehicle control apparatus described in the item (3), when an angular velocity of the yaw rate is equal to or lower than a third angular velocity, or equal to or higher than a fourth angular velocity, the oscillating detection unit does not determine that the trailer has the oscillating motion until an oscillating motion index reaches or exceeds an oscillating motion presence determination threshold value larger than an oscillating motion presence determination threshold value, and determines that the trailer does not have the oscillating motion if the oscillating motion index falls below an oscillating motion absence determination threshold value larger than an oscillating motion absence determination threshold value.

(13) In the vehicle control apparatus described in the item (1), the reference value is a yaw rate estimated form a wheel speed.

(14) In the vehicle control apparatus described in the item (1), the oscillating detection unit compares the output value and the reference value, and detects that the trailer towed by the towing vehicle has the oscillating motion if a gradual increase occurs in a difference of the amplitude of the output value from the amplitude of the reference value.

(15) In the vehicle control apparatus described in the item (1), the vehicle control apparatus damps the oscillating motion by slowing down the vehicle if the trailer is determined to have the oscillating motion.

(16) In the vehicle control apparatus described in the item (1), the oscillating detection unit compares the output value and the reference value, and detects that the trailer towed by the vehicle has the oscillating motion if a gradual increase occurs in a difference of the amplitude of the output value from the amplitude of the reference value.

(17) A vehicle control apparatus includes a yaw rate sensor configured to detect a yaw rate acting on a vehicle, a lateral acceleration sensor configured to detect a lateral acceleration acting on the vehicle, a vehicle behavior reference value calculation unit configured to estimate a yaw rate or a lateral acceleration supposed to act on the vehicle as a reference value from a state of the vehicle, an oscillating detection unit configured to compare an output value of at least one of the sensors and the reference value corresponding to the at least one of the sensors, and detect that a trailer towed by a towing vehicle has an oscillating motion if an amplitude of the output value increases relative to an amplitude of the reference value, and a speed reduction unit configured to slow down a speed of the towing vehicle if the oscillating motion is detected by the oscillating detection unit.

(18) In the vehicle control apparatus described in the item (17), the oscillating detection unit compares the output value and the reference value, and detects that the trailer towed by the towing vehicle has the oscillating motion if a gradual increase occurs in a difference of the amplitude of the output value from the amplitude of the reference value.

(19) A vehicle control apparatus includes a yaw rate sensor configured to detect a yaw rate acting on a vehicle, a yaw rate reference value calculation unit configured to calculate a reference value of the yaw rate, based on a steering angle and a speed of a vehicle body, a first amplitude calculation unit configured to calculate an amplitude from an output value of the yaw rate sensor, a second amplitude calculation unit configured to calculate an amplitude of the reference value of the yaw rate, an amplitude comparison unit configured to compare the amplitudes respectively calculated by the first and second amplitude calculation units, and an oscillating detection unit configured to detect that a trailer towed by a towing vehicle has an oscillating motion if the comparison reveals a gradual increase in a difference of the amplitude of the output value from the amplitude of the reference value.

This application claims priority to Japanese Patent Application No. 2013-194382 filed on September 19, 2013. The entire disclosure of Japanese Patent Application No. 2013-194382 filed on September 19, 2013 including the specification, the claims, the drawings, and the summary is incorporated herein by reference in its entirety.

REFERENCE SIGNS LIST

100    vehicle control apparatus
101    wheel speed sensor
102    steering angle sensor
103    yaw rate sensor
111    oscillating motion control unit
121    engine controller
122    brake controller
201    vehicle body speed estimation unit
202    model yaw rate calculation unit
203    angular velocity calculation unit
204    amplitude calculation unit
205    angular velocity calculation unit
206    amplitude calculation unit
207    oscillating motion determination unit
208    vehicle braking/driving instruction calculation unit
221    yaw rate estimation unit
222    oscillating motion determination unit

**Claims**

1.    A vehicle control apparatus comprising:

a vehicle behavior detection sensor configured to detect a behavior acting on a vehicle;

a vehicle behavior reference value calculation unit configured to calculate a reference value of the behavior of the vehicle, based on an output value of another sensor than the vehicle behavior detection sensor; and

an oscillating detection unit configured to compare the output value of the sensor and the reference value and detect that a trailer towed by a towing vehicle has an oscillating motion, based on a magnitude of an amplitude of the output value relative to an amplitude of the reference value.

2. The vehicle control apparatus according to claim 1, wherein the behavior of the vehicle is at least one of a yaw rate, a lateral acceleration, and a slip angle of the vehicle.

3. The vehicle control apparatus according to claim 2, wherein the output value of the sensor and the reference value are at least one of a yaw rate, a lateral acceleration, and a slip angle.

4. The vehicle control apparatus according to claim 3, wherein angular velocities of the output value and the reference value are estimated from the output value and the reference value, and second-order temporal differential values of the output value and the reference value.

5. The vehicle control apparatus according to claim 4, wherein the amplitudes are estimated from the output value and the reference value, first-order temporal differential values of the output value and the reference value, and the angular velocities of the output value and the reference value.

6. The vehicle control apparatus according to claim 5, wherein the oscillating detection unit increases or reduces an oscillating tendency index for determining the oscillating motion according to a difference between the amplitude of the reference value and the amplitude of the output value.

7. The vehicle control apparatus according to claim 6, wherein the oscillating detection unit determines that the trailer has the oscillating motion if the oscillating tendency index is equal to or higher than a first determination threshold value, and determines that the trailer does not have the oscillating motion if the oscillating tendency index is lower than a second determination threshold value.

8. The vehicle control apparatus according to claim 7, wherein the oscillating tendency index is an integral value of a value according to the difference between the amplitude of the reference value and the amplitude of the output value of the sensor.

9. The vehicle control apparatus according to claim 4, wherein the amplitudes are estimated from first-order differential values of the output value and the reference value, and the second-order differential values of the output value and the reference value.

10. The vehicle control apparatus according to claim 3, wherein, when an angular velocity of the yaw rate is higher than a third angular velocity and lower than a fourth angular velocity, the oscillating detection unit determines that the trailer has the oscillating motion if an oscillating tendency index is equal to or higher than an oscillating motion presence determination threshold value, and determines that the oscillating motion is maintained until the oscillating tendency index falls below an oscillating motion absence determination threshold value after that.

11. The vehicle control apparatus according to claim 3, wherein the oscillating detection unit does not determine that the trailer has the oscillating motion if an angular velocity of the output value is equal to or lower than a first angular velocity that does not cause the oscillating motion, or equal to or higher than a second angular velocity that does not cause the oscillating motion.

12. The vehicle control apparatus according to claim 3, wherein, when an angular velocity of the yaw rate is equal to or lower than a third angular velocity, or equal to or higher than a fourth angular velocity, the oscillating detection unit does not determine that the trailer has the oscillating motion until an oscillating motion index reaches or exceeds an oscillating motion presence determination threshold value larger than an oscillating motion presence determination threshold value, and determines that the trailer does not have the oscillating motion if the oscillating motion index falls below an oscillating motion absence determination threshold value larger than an oscillating motion absence determination threshold value.

13. The vehicle control apparatus according to claim 1, wherein the reference value is a yaw rate estimated form a wheel speed.

**14.** The vehicle control apparatus according to claim 1, wherein the oscillating detection unit compares the output value and the reference value, and detects that the trailer towed by the towing vehicle has the oscillating motion if a gradual increase occurs in a difference of the amplitude of the output value from the amplitude of the reference value.

**15.** The vehicle control apparatus according to claim 1, wherein the vehicle control apparatus damps the oscillating motion by slowing down the vehicle if the trailer is determined to have the oscillating motion.

**16.** A vehicle control apparatus comprising:

a yaw rate sensor configured to detect a yaw rate acting on a vehicle;
a lateral acceleration sensor configured to detect a lateral acceleration acting on the vehicle;
a vehicle behavior reference value calculation unit configured to estimate a yaw rate or a lateral acceleration supposed to act on the vehicle as a reference value from a state of the vehicle;
an oscillating detection unit configured to compare an output value of at least one of the sensors and the reference value corresponding to the at least one of the sensors, and detect that a trailer towed by a towing vehicle has an oscillating motion if an amplitude of the output value increases relative to an amplitude of the reference value; and
a speed reduction unit configured to slow down a speed of the towing vehicle if the oscillating motion is detected by the oscillating detection unit.

**17.** The vehicle control apparatus according to claim 16, wherein the oscillating detection unit compares the output value and the reference value, and detects that the trailer towed by the towing vehicle has the oscillating motion if a gradual increase occurs in a difference of the amplitude of the output value from the amplitude of the reference value.

**18.** A vehicle control apparatus comprising:

a yaw rate sensor configured to detect a yaw rate acting on a vehicle;
a yaw rate reference value calculation unit configured to calculate a reference value of the yaw rate, based on a steering angle and a speed of a vehicle body;
a first amplitude calculation unit configured to calculate an amplitude from an output value of the yaw rate sensor;
a second amplitude calculation unit configured to calculate an amplitude of the reference value of the yaw rate;
an amplitude comparison unit configured to compare the amplitudes respectively calculated by the first and second amplitude calculation units; and
an oscillating detection unit configured to detect that a trailer towed by a towing vehicle has an oscillating motion if the comparison reveals a gradual increase in a difference of the amplitude of the output value from the amplitude of the reference value.

Fig. 1

Fig. 2

EP 3 034 373 A1

Fig. 3

$$
\boxed{\text{START}}
$$

S301 — $\omega \leqq \omega_1$ ?  YES

NO

S302 — $\omega \geqq \omega_2$ ?  YES

NO

S303 — $Kp \leftarrow R - R*$

S304 — $Ki \leftarrow max(min(Kp - Kp_0 + ki, Ki_{max}), 0)$

S305 — $K \leftarrow \alpha p \cdot Kp + \alpha i \cdot Ki$

S306 — YES  $K \geqq K_1$ ?

NO

S307 — $K < K_2$ ?  YES

NO

S308 — SET DETERMINATION OF PRESENCE OF ROLLING MOTION

S309 — RESET DETERMINATION OF PRESENCE OF ROLLING MOTION

$$
\boxed{\text{END}}
$$

Fig. 4

Fig. 5

111

202 → MODEL YAW RATE CALCULATION UNIT

STEERING ANGLE δ →

201 → VEHICLE BODY SPEED ESTIMATION UNIT

WHEEL SPEED Vw →

203 → ANGULAR SPEED CALCULATION UNIT

204 → AMPLITUDE CALCULATION UNIT

221 → YAW RATE ESTIMATION UNIT

205 → ANGULAR SPEED CALCULATION UNIT

206 → AMPLITUDE CALCULATION UNIT

222 → ROLLING MOTION DETERMINATION UNIT

208 → VEHICLE BRAKING/ DRIVING INSTRUCTION CALCULATION UNIT

EP 3 034 373 A1

Fig. 6

```
                        ┌─────────────┐
                        │    START    │
                        └─────────────┘
                               │
                               ▼
S321 ──┐    ┌─────────────────────────────────────┐
       │    │            Kp←R−R*                   │
       │    └─────────────────────────────────────┘
                               │
                               ▼
S322 ──┐    ┌─────────────────────────────────────┐
       │    │          Kp1=MAP1(ω)                 │
       │    └─────────────────────────────────────┘
                               │
                               ▼
S323 ──┐                                               
 YES ──┤    ⟨            Kp≧Kp1 ?                   ⟩
       │                       │ NO
       │                       ▼
S324 ──┐    ┌─────────────────────────────────────┐
       │    │          Kp2=MAP2(ω)                 │
       │    └─────────────────────────────────────┘
                               │
                               ▼
S325 ──┐                                         YES
       │    ⟨            Kp<Kp2 ?                  ⟩────┐
       │                       │ NO                    │
       │                       │                       │
S308   │                       │                  S309 │
  ┌────┴────────────────┐      │      ┌────────────────┴───┐
  │ SET DETERMINATION   │      │      │ RESET DETERMINATION│
  │ OF PRESENCE OF      │      │      │ OF PRESENCE OF     │
  │ ROLLING MOTION      │      │      │ ROLLING MOTION     │
  └─────────┬───────────┘      │      └─────────┬──────────┘
            │                  ▼                │
            └──────────────────┼────────────────┘
                               ▼
                        ┌─────────────┐
                        │     END     │
                        └─────────────┘
```

Fig. 7

Fig. 8

Fig. 9

YAW RATE

AVz_c

AVz*    AVz_a

ANGULAR SPEED OF
YAW RATE ω

ω_a

ω_c

ROLLING MOTION
INDEX Kp

Kp_c    Kp_a

Kp1_c
Kp1_a
Kp2_c
Kp2_a

ENGINE TORQUE Te

Te_a

Te_c

BRAKE HYDRAULIC
PRESSURE P

P_a    P_c

VEHICLE BODY SPEED
Vcar

Vcar_a

Vcar_c

T0    T1    T3'    T5'    TIME →

# EP 3 034 373 A1

## INTERNATIONAL SEARCH REPORT

| International application No. |
|---|
| PCT/JP2014/073022 |

### A. CLASSIFICATION OF SUBJECT MATTER

*B60W40/114*(2012.01)i, *B60K28/10*(2006.01)i, *B60T7/20*(2006.01)i, *B60T8/1755*(2006.01)i, *B60W30/02*(2012.01)i, *B62D53/02*(2006.01)i

According to International Patent Classification (IPC) or to both national classification and IPC

### B. FIELDS SEARCHED

Minimum documentation searched (classification system followed by classification symbols)
B60W40/114, B60K28/10, B60T7/20, B60T8/1755, B60W30/02, B62D53/02

Documentation searched other than minimum documentation to the extent that such documents are included in the fields searched
Jitsuyo Shinan Koho        1922-1996    Jitsuyo Shinan Toroku Koho    1996-2014
Kokai Jitsuyo Shinan Koho    1971-2014    Toroku Jitsuyo Shinan Koho    1994-2014

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y<br>A | WO 2010/106643 A1  (Toyota Motor Corp.),<br>23 September 2010 (23.09.2010),<br>paragraph [0027]; fig. 1 to 7<br>(Family: none) | 1-3,14-18<br>11,13<br>4-10,12 |
| Y | JP 2009-12488 A  (Honda Motor Co., Ltd.),<br>22 January 2009 (22.01.2009),<br>paragraphs [0042], [0052], [0059], [0061]; fig.<br>1, 4, 5<br>& US 2009/0005946 A1    & EP 2008892 A2<br>& DE 602008004186 D | 11 |
| Y | WO 2010/087022 A1  (Toyota Motor Corp.),<br>05 August 2010 (05.08.2010),<br>paragraphs [0009] to [0011], [0021] to [0030];<br>fig. 1 to 3<br>& US 2012/0029782 A1 | 13 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>05 November, 2014 (05.11.14) | Date of mailing of the international search report<br>18 November, 2014 (18.11.14) |
|---|---|
| Name and mailing address of the ISA/<br>Japanese Patent Office | Authorized officer |
| Facsimile No. | Telephone No. |

Form PCT/ISA/210 (second sheet) (July 2009)

22

**INTERNATIONAL SEARCH REPORT**

International application No.

PCT/JP2014/073022

C (Continuation). DOCUMENTS CONSIDERED TO BE RELEVANT

| Category* | Citation of document, with indication, where appropriate, of the relevant passages | Relevant to claim No. |
|---|---|---|
| A | JP 2006-505442 A  (Continental Teves AG. & Co. OHG),<br>16 February 2006 (16.02.2006),<br>paragraphs [0046], [0059] to [0066]; fig. 5<br>& US 2006/0033308 A1    & EP 1562809 A<br>& WO 2004/041612 A1 | 1-18 |
| A | JP 10-236289 A  (Toyota Motor Corp.),<br>08 September 1998 (08.09.1998),<br>paragraph [0035]; fig. 2, 3, 5<br>& US 6042196 A | 1-18 |
| A | JP 2003-503276 A  (Robert Bosch GmbH),<br>28 January 2003 (28.01.2003),<br>paragraph [0042]<br>& DE 10031266 A1          & WO 2001/002227 A1<br>& EP 1107893 A          & US 6523911 B1 | 1-18 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4758102 B
- JP 2013194382 A